# EUROPEAN PATENT APPLICATION

(11) **EP 1 531 644 A2**
(43) Date of publication of application: **18.05.2005**
(21) Application number: 04026922.7
(22) Date of filing: 12.11.2004
(51) Int. Cl.: H04Q 7/32

(54) **Mobile communication terminal and method using a class of quality of service in the random access procedure**

(30) Priority: 12.11.2003 KR 2003079871
(71) Applicant: Samsung Electronics Co., Ltd., Suwon-si, Gyeonggi-do (KR)
(72) Inventor: Cha, Jung-Yoon, Yeongtong-gu Suwon-si Gyeonggi-do (KR)
(74) Representative: Grünecker, Kinkeldey, Stockmair & Schwanhäusser Anwaltssozietät

(57) **Abstract**

At least one random access parameter, which is to be used at a random access stage, is set to a value corresponding to a user class of QoS (Quality of Service) set for a mobile terminal. The random access stage is performed based on the random access parameters when a request is made to access a mobile communication network. Accordingly, as the user class is increased, a higher success rate of access to the mobile communication network is guaranteed, thereby improving the guarantee of QoS set for the terminal.

## Description

The present invention relates to a mobile communication terminal, and more particularly to a mobile communication terminal and method for providing differential services based on a unique QoS (Quality of Service) set for each mobile communication terminal.

In a GSM (Global System for Mobile communications) service, mobile communication terminals supporting the GSM access a mobile communication network and are assigned channels on a first-access first-assigned priority order as there is no QoS concept in the GSM service. There is a basis for providing differential QoSs to mobile communication terminals that adopt a GPRS (General Packet Radio System). According to the QoS definition in specification GSM 04.08/10.5.6.5, GPRS mobile terminals are provided with various QoS classes: delay, reliability, precedence, peak throughput and mean throughput.

Such a QoS is assigned to the mobile communication terminals after they have successfully performed a random access process to access a mobile communication network. The random access process or stage is a process in which a mobile communication terminal transmits a random access burst to a mobile communication network in order to gain access to the network, and the terminal receives an access grant from the network when the network successfully receives a collision-free random access burst.

It is possible to provide differential QoSs to mobile communication terminals. However, since the QoS is assigned only after the mobile communication terminal has successfully gained access to the mobile communication network, the preset QoS may be of no use if the terminal has not succeeded in gaining access to the network. For example, if a mobile communication terminal is located in the service area of a base station where there is a high possibility of collision between random access bursts from different terminals during peak usage hours when there are a large number of calls, it is highly unlikely that the terminal will successfully pass the random access stage and thus may fail to gain access to the network even though the mobile communication terminal has been assigned a high QoS.

The present invention solves the above problem.

It is the object of the present invention to provide a mobile communication terminal and a method for improving the guarantee of a QoS set for each mobile communication terminal.

This object is solved by the subject matter of the independent claims.

Preferred embodiments are defmed by the dependent claims.

It is an aspect of the present invention to provide a mobile communication terminal and a method for implementing a QoS at a random access stage.

In accordance with the present invention, at least one random access parameter, which is to be used at a random access stage, is set to a value corresponding to a user class of QoS set for a mobile terminal. The random access stage is based on the random access parameters when a request is made to access a mobile communication network. Accordingly, as the user class QoS increases, an increase in the success rate of access to the mobile communication network is guaranteed, thereby improving the guarantee of the QoS set for the terminal.

The above features and other advantages of the present invention will be more clearly understood from the following detailed description taken in conjunction with the accompanying drawings, in which:
Fig. 1 is a diagram illustrating the random access parameters used at a conventional random access stage;
Fig. 2 is a block diagram illustrating the configuration of a mobile communication terminal according to an embodiment of the present invention;
Fig. 3 is a flow chart illustrating a method for implementing QoS at a random access stage according to an embodiment of the present invention; and
Fig. 4 is a diagram illustrating the success rate of random access that varies depending on user classes according to the embodiment of the present invention.

Now, preferred embodiments of the present invention will be described in detail with reference to the annexed drawings. In the following description, a detailed description of known functions and configurations incorporated herein will be omitted when it may obscure the subject matter of the present invention.

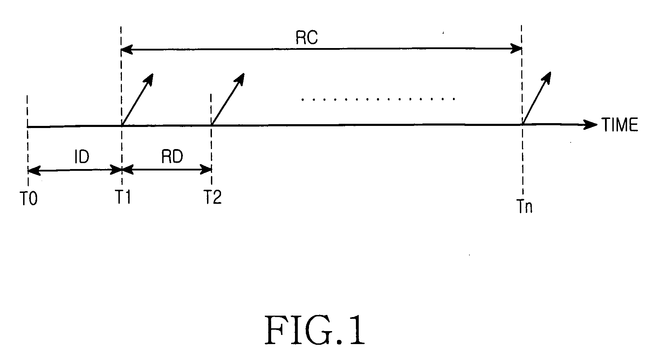

The definitions of random access parameters used in the random access stage described above are first described with reference to Fig. 1. The random access parameters include 3 parameters: ID (Initial Delay), RD (Repeat Delay) and RC (Repeat Count) as shown in Fig. 1. The initial delay (ID) defines a time interval from a time T0, when a request is made to access a mobile communication network, to a time T1, when the first transmission of a random access burst is performed. For the case where the random access burst transmission is repeated, the repeat delay (RD) defines a time interval from the time T1, when the previous transmission of the random access burst is performed, to a time T2, when the random access burst transmission is repeated. The repeat count (RC) defines the number of repetitions of the random access burst transmission, i.e., the number of times the random access burst transmission can be repeated, in the case where an access grant is not received from the mobile communication network even if the random access burst transmission has been performed. In Fig. 1, the upward pointing arrows "↗" represent the transmission of the random access burst.

For example, if a mobile communication terminal is requested to access a mobile communication network at time T0 in Fig. 1, the terminal transmits a random access burst to the mobile communication network at time T1 after the initial delay time ID has passed. If the terminal succeeds in accessing the mobile communication network by receiving an access grant from the network after transmitting the random access burst, the terminal completes the random access stage, and the network then assigns a call channel to the terminal. On the other hand, if the terminal fails to receive an access grant from the network, even after transmitting the random access burst, the terminal retransmits the random access burst at time T2 after the repeat delay time RD has passed from time T1. If this retransmission of the random access burst also fails to receive an access grant from the mobile communication network, the random access burst transmission is again repeated at a time after the repeat delay time RD has passed from time T2. As reception of an access grant from the mobile communication network is unsuccessful, the random access burst transmission is repeated for a number of times based on the repeat count RC.

In the prior art, such random access parameters ID, RD and RC are set to the same values for each of the mobile communication terminals. Thus, even if different QoS levels are set for the terminals, the terminals perform the random access stage irrespective of their QoS levels.

However, a mobile communication terminal according to an embodiment of the present invention sets at least one of the random access parameters to a value corresponding to a user class of a QoS set for the terminal. Then, if a request is made to access the mobile communication network, the random access stage is performed based on the random access parameters, at least one of which is set to the value corresponding to the user class. The user class of QoS is set differently for each terminal according to each user's profile. Information representing the set user class of QoS is recorded in an SIM (Subscriber Identification Module) card mounted in each terminal.

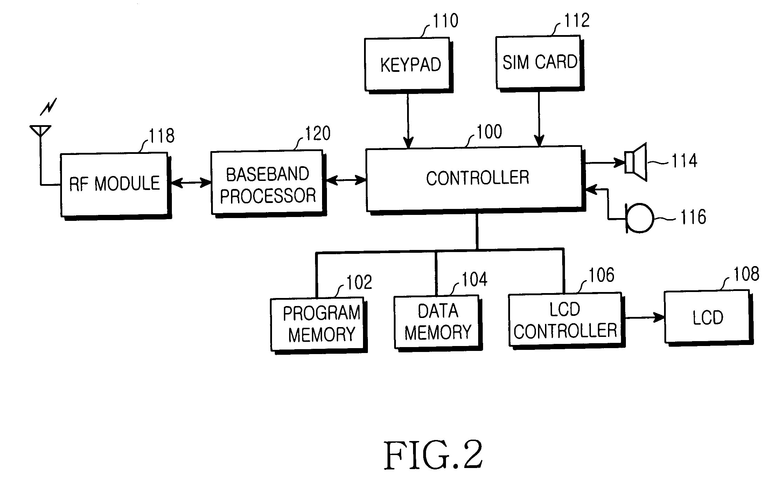

Fig. 2 is a block diagram illustrating the configuration of a mobile communication terminal according to an embodiment of the present invention. As shown in Fig. 2, information representing a user class of QoS set for a corresponding user on a user-by-user basis according to the embodiment of the present invention is recorded in a SIM card 112 in a conventional GPRS mobile communication terminal. A controller 100 handles general telephone communication, data communication, various additional functions, etc, and also performs a random access stage on the basis of random access parameters set to values corresponding to the user class of QoS recorded in the SIM card 112 according to the present invention. A program memory 102 stores various reference data and a microcode of a program for implementing the operation of the controller 100. A data memory 104 is provided as a working memory for the controller 100. An LCD (Liquid Crystal Display) controller 106 operates an LCD 108, a display device, under the control of the controller 100 to allow the LCD 108 to display various kinds of image information. A keypad 110 includes dialing keys such as 0 - 9, *, #, etc., and a number of function keys, for example, menu, message, select, send, delete, power on/off, volume, etc. The keypad 110 provides key input data, corresponding to a key pressed by the user, to the controller 100. The SIM card 112 stores an SIM having a field in which information representing a user class of QoS set for the corresponding user on a user-by-user basis is recorded. A speaker 114 and a microphone 116 connected to the controller 100 are used in telephone communication and audio recording. An RF (Radio Frequency) module 118 transmits and receives RF or wireless signals to and from a mobile communication base station via an antenna. The RF module 118 modulates a signal for transmission, received from the controller 100 through a baseband processor 120, and transmits the modulated RF signal through the antenna. The RF module 118 demodulates an RF signal received through the antenna, and transfers it to the controller 100 through the baseband processor 120. The baseband processor 120 processes baseband signals communicated between the RF module 118 and the controller 100.

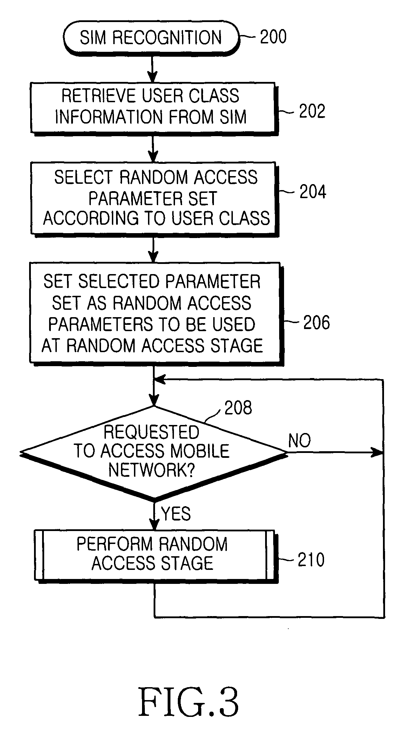

Fig. 3 is a flow chart illustrating showing the procedure performed by the controller 100 according to an embodiment of the present invention. An example of the QoS at the random access stage according to the embodiment of the present invention will now be described with reference to Fig. 3. If a mobile communication terminal is powered on, the controller 100 recognizes an SIM in the SIM card 112 at step 200. The controller 100 then retrieves information of a user class of QoS from the SIM card 112 at step 202.

At step 204, the controller 100 selects a random access parameter set corresponding to the user class from the random access parameter sets in a random access parameter table. An example of a random access parameter table is shown in Table 1, which is stored in the program memory 102. At step 206, the selected random access parameter set is set as the random access parameters to use in the random access stage.

**Table 1**

| User_QoS_Level | ID | RD | RC |
|---|---|---|---|
| 1 | 20 ∼ 50 ms | 20 ∼ 50 ms | 7 |
| 2 | 50 ∼ 100 ms | 50 ∼ 100 ms | 6 |
| . | . | . | . |
| . | . | . | . |
| . | . | . | . |
| N | Max. delay | Max. delay | 0 |

In Table 1, 'User_QoS_Level' represents the user class of QoS, and 'ID', 'RD' and 'RC' represent the initial delay, the repeat delay and the repeat count, respectively, as shown in Fig. 1. As shown in Table 1, random access parameter sets having different parameter values according to user classes are provided correspondening to the user classes. It can be seen that a shorter initial delay ID, a shorter repeat delay RD, and a higher repeat count RC (or a larger number of repetitions) are set for a user of a higher user class, whereas a longer initial delay ID, a longer repeat delay RD, and a smaller repeat count RC are set for a user of a lower user class.

For example, if the user class recorded in the SIM card 112 is the first class, the controller 100 sets the initial delay ID and the repeat delay RD to 20 ∼ 50 ms, and sets the repeat count RC to 7.

Returning again to Fig. 3, each time a request is made to access the mobile communication terminal, the controller 100 performs the random access stage based on random access parameters corresponding to the user class as described above, at steps 208 and 210. Here, as the terminal is set to a higher user class, the terminal has shorter initial delays ID and repeat delays RD, and a higher repeat count RC, and thus will have a greater success rate of access to the mobile communication network. On the contrary, as the terminal is set to a lower user class, the terminal has a lesser success rate of access to the network.

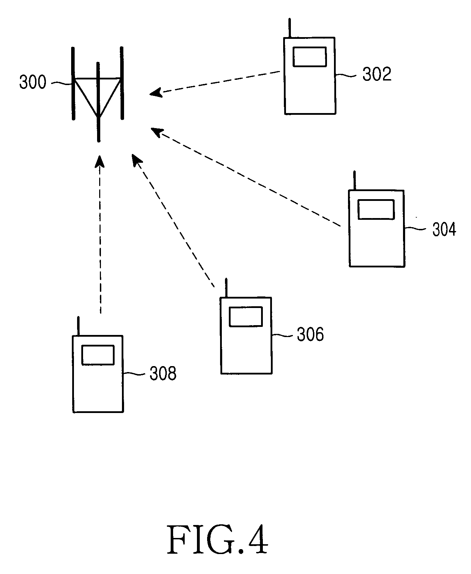

For example, let us assume that there are 4 mobile communication terminals 302, 304, 306 and 308 in a service area of a certain mobile communication base station 300, as shown in Fig. 4, and the respective user classes of the terminals 302, 304, 306 and 308 and the corresponding random access parameters are set as shown in Table 2. In this example, the terminal 302 has the highest success rate of access to the mobile communication network, and the terminal 306 has the lowest success rate of access to the network.

**Table 2**

| Terminal | User_QoS_Level | ID | RD | RC | Order of Success Rate |
|---|---|---|---|---|---|
| 302 | 1 | 20 ∼ 50 ms | 20 ∼ 50 ms | 7 | 1 |
| 304 | 3 | 100 ∼ 150 ms | 100 ∼ 150 ms | 5 | 2 |
| 306 | 5 | 200 ∼ 250 ms | 200 ∼ 250 ms | 3 | 3 |
| 308 | 3 | 100 ∼ 150 ms | 100 ∼ 150 ms | 5 | 2 |

The present invention can thus provide a QoS guarantee so that the success rate of access to the mobile communication network varies depending on user classes of QoS set for the terminals. This makes it possible to provide a service that guarantees a higher call success rate to users that pay for a higher QoS.

Although the preferred embodiments of the present invention have been described for illustrative purposes, various modifications are possible without departing from the scope and spirit of the invention. For example, the above description of the present invention has been given with reference to an example where a random access parameter set composed of 3 parameters (i.e., the initial delay ID, the repeat delay RD and the repeat count RC) is selected from random access parameter sets in which no two parameter values are the same according to user classes, as shown in Table 1, and the selected parameter set is set as random access parameters to be used for random access. However, it is also possible in the present invention that only one or two of the 3 random access parameters are set differently according to the user classes, and the remaining random access parameters are set equally for all the mobile communication terminals, irrespective of their user classes.

In addition, instead of using the random access parameter table as shown in Table 1, the initial delay ID, the repeat delay RD and the repeat count RC may be calculated based on the corresponding user class, and the calculated values can be set as the random access parameters to be used at the random access stage. For example, each of the initial and repeat delays can be obtained by multiplying the corresponding user class by a predetermined time constant, and the repeat count can be obtained by subtracting a corresponding user class number from the maximum repeat count and then subtracting a predetermined count number from the resulting value.

Further, it is also possible that in the case where a request is made to access the mobile communication network via an urgent call such as an emergency 911 call, a user class of QoS relating to random access is temporarily increased, compared to the user class recorded in the SIM card 112, so as to give priority to processing the urgent call even when network traffic is heavy. In other words, if a request by an urgent call is made to access the mobile communication network, the controller 100 may perform the random access stage on the basis of random access parameter values corresponding to the highest user class or a user class that is higher than the user class recorded in the SIM card 112 by a predetermined level.

The present invention as described above may be applied not only to GPRS mobile terminals but also to any mobile terminal that performs a random access stage for accessing the mobile communication network.

Accordingly, the scope of the present invention should not be limited to the embodiments described above, but defined by the accompanying claims.

## Claims

1. A mobile communication terminal for implementing a quality of service priority at a random access stage using random access parameters, the terminal comprising:
a subscriber identification module card for storing information representing a user class of quality of service set for the terminal; and
a controller for setting at least one of the random access parameters to a value corresponding to the user class, and performing a random access stage operation based on the random access parameters including the at least one set random access parameter when a request is made to access a mobile communication network.

2. The terminal according to claim 1, wherein the controller sets the at least one random access parameter to increase the success rate of access to the mobile communication network.

3. The terminal according to claim 1 or 2, wherein the controller is adapted for processing the random access parameters that include:
an initial delay that defines a time interval from a time when a request is made to access a mobile communication network, to a time when first transmission of a random access burst is performed;
a repeat delay which defines a time interval from a time when previous transmission of the random access burst is performed to a time when the random access burst transmission is repeated; and
a repeat count that defines the number of times the random access burst transmission can be repeated, in case where an access grant is not received from the mobile communication network even if the random access burst transmission has been performed.

4. The terminal according to claim 3, wherein as the user class is increased, the controller decreases the initial delay time and the repeat delay time, and increases the repeat count.

5. The terminal according to claim 4, wherein if the request to access the mobile communication network is made by an emergency call, the controller sets at least one of the random access parameters to a value corresponding to one of a highest user class and a user class higher than the set user class.

6. A method for implementing a quality of service priority at a random access stage using random access parameters in a mobile communication terminal, the method comprising the steps of:
a) determining a user class of quality of service set for the mobile communication terminal;
b) setting at least one of the random access parameters to a value corresponding to the user class; and
c) performing the random access stage based on the set random access parameters when a request is made to access a mobile communication network.

7. The method according to claim 6, wherein step b) includes the step of setting the at least one random access parameter to increase the success rate of access to the mobile communication network.

8. The method according to claim 6 or 7, wherein the random access parameters include:
an initial delay that defines a time interval from a time when a request is made to access a mobile communication network, to a time when first transmission of a random access burst is performed;
a repeat delay, which defines a time interval from a time when previous transmission of the random access burst is performed to a time when the random access burst transmission is repeated; and
a repeat count that defines the number of times the random access burst transmission can be repeated, in case where an access grant is not received from the mobile communication network even if the random access burst transmission has been performed.

9. The method according to claim 8, wherein as the user class is increased, the initial delay time and the repeat delay time are decreased, and the repeat count is increased.

10. The method according to claim 9, wherein if the request to access the mobile communication network is made by an emergency call, at least one of the random access parameters is set to a value corresponding to on of a highest user class and a user class higher than the set user class.

11. The method according to one of claims 6 to 10, wherein information representing the user class is stored in a subscriber identification module card provided in the mobile communication terminal.
